# EUROPÄISCHE PATENTSCHRIFT

(11) **EP 1 751 042 B1**
(45) Veröffentlichungstag und Bekanntmachung des Hinweises auf die Patenterteilung: **17.12.2008**
(21) Anmeldenummer: 05740013.7
(22) Anmeldetag: 12.05.2005
(51) Int. Cl.: B65G 65/23

(54) **VERFAHREN UND VORRICHTUNG ZUM ENTLEEREN VON BEHÄLTERN**
METHOD AND DEVICE FOR EMPTYING CONTAINERS
PROCEDE ET DISPOSITIF POUR VIDER DES CONTENANTS

(30) Priorität: 18.05.2004 AT 8752004
(43) Veröffentlichungstag der Anmeldung: 14.02.2007
(73) Patentinhaber: SSI Schäfer Peem GmbH, 8051 Graz-Gösting (AT)
(72) Erfinder: SCHÄFER, Gerhard, SSI Schäfer, Fritz Schäfer GmbH, 57290 Neunkirchen (DE)
(74) Vertreter: Wegener, Markus
(86) Internationale Anmeldenummer: PCT/AT2005/000161
(87) Internationale Veröffentlichungsnummer: WO 2005/110899

(56) Entgegenhaltungen:
- DE-A1- 3 045 145
- NL-C1- 1 020 526
- US-A- 6 098 783

## Beschreibung

### GEBIET DER ERFINDUNG

Die vorliegende Erfindung bezieht sich auf ein Verfahren und eine Vorrichtung zum Entleeren von mittels Transporteinrichtungen transportierten Transportbehältern.

Der Einsatz bekannter Förder- und Kommissioniersysteme ermöglicht die schnelle und zuverlässige Kommissionierung von Waren jeder Art. Die Kommissionierung erfolgt dabei in Abhängigkeit von den Waren entweder vollautomatisch, halbautomatisch oder manuell. Allen Varianten gleich ist die Verwendung von Transportbehältern, die einem bestimmten Kommissionierauftrag zugeordnet sind. In diese Transportbehälter werden die zu kommissionierenden Waren entweder automatisiert oder manuell von Hand eingefüllt. Die Waren können dabei verpackt oder offen in die Transportbehälter gegeben werden.

Zusätzlich zu den Waren wird in der Regel auch ein Lieferschein oder eine Rechnung in den Transportbehälter gelegt.

Auf ihrem Weg durch ein Kommissioniersystem werden die Waren oft auch umgefüllt und wechseln den Transportbehälter bzw. erfolgt nach dem Zusammenstellen eines Kommissionierauftrags das Umfüllen der Waren vom Transportbehälter in einen Versandbehälter. Der Transportbehälter wird dann wieder dem Kreislauf des Kommissioniersystems übergeben. Dabei verbleiben jedoch oft Verpackungsreste im Behälter, die nach mehreren Umläufen im Kommissioniersystems das Volumen im Behälter stark verringern, bzw. das Umfüllen der Transportbehälter erschweren. Insbesondere im Behälter verbleibende Plastikfolien tragen dazu bei, dass das Transportbehältervolumen nicht optimal ausgenutzt wird. Diese Verpackungsreste müssen daher aus dem Behälterinneren entfernt werden.

Bei Transportbehältern, die nach Durchlaufen des Kommissioniersystems an den Endkunden verschickt werden, kann es auch passieren, dass, falls dieser Transportbehälter vorher in einem Bereich des Kommissioniersystems verwendet wurde, wo kein Versand an den Endkunden erfolgt, sich noch Lieferscheine oder Rechnungen des vorigen Auftrags im Behälter befinden. Das irrtümliche Versenden dieser Dokumente an den nächsten Kunden muss jedoch schon alleine aus Datenschutzgründen verlässlich verhindert werden, weswegen in herkömmlicher Weise eine händische Entleerung dieser Behälter erforderlich ist.

### STAND DER TECHNIK

Aus der DE 30 45 145 A1 ist eine Vorrichtung zum automatischen Entleeren eines Behälters mittels eines schwenkbaren Armes und einer Zange, welche den Behälter allseitig umfasst, bekannt.

Diese Vorrichtung erweist sich aufgrund ihrer aufwändigen und nur auf eine festgelegte Behäterform abgestimmten Klemmung und der rein mechanisch kontrollierten Stellantriebe zum Schwenken und Drehen des Behälters als wenig flexibel und benötigt vergleichsweise viel Zeit zur Entleerung eines einzelnen Behälters. Ebenfalls beansprucht diese Vorrichtung aufgrund der vollführten 180°-Schwenkbewegung und der Vorsehung eines zweiten, parallelen Förderbandes zusätzlichen Raum.

Aus der US 3 291 329 A ist eine Vorrichtung bekannt, bei welcher ein mittels Förderband zugeführter Behälter an seitlich abstehenden Laschen von zwei Schwenkarmen, welche in einem Rahmen vertikal anhebbar sind, ergriffen und an vorgesehener Stelle entleert wird.

Auch hier liegt wiederum während des gesamten Entleerenes ein rein mechanisch erzwungener Bewegungsvorgang, welcher sich gegenüber den Erfordernissen moderner Fließbandproduktion als zu träge und langsam erweist. Eventuell im Behälter verbleibende Restmaterialen müssen nach wie vor händisch aussortiert werden.

### DARSTELLUNG DER ERFINDUNG

Es ist daher die Aufgabe der vorliegenden Erfindung diese Nachteile zu vermeiden und eine Vorrichtung vorzusehen, welche eine rasche und automatisierte Entleerung der Behälter ermöglicht.

Erfindungsgemäß wird dies durch ein Verfahren mit den kennzeichnenden Merkmalen des Anspruchs 1 sowie eine Vorrichtung mit den kennzeichnenden Merkmalen des Anspruchs 5 erreicht.

Dadurch ist es möglich den in die Vorrichtung einfahrenden Transportbehälter von Abfallmaterial zu befreien und zu garantieren, dass der Transportbehälter für die nächste Verwendung vollkommen leer ist. Das erfindungsgemäße Verfahren bzw. die erfindungsgemäße Vorrichtung kann an jeder beliebigen Stelle in einem Kommissioniersystem oder einer Fördertechnik durchgeführt bzw. positioniert werden, je nachdem, ab welcher Position garantiert freie Transportbehälter zur Verfügung gestellt werden müssen. Besonders wichtig ist dabei, dass der zu entleerende Transportbehälter an einander gegenüberliegenden Bereichen seiner Seitenwände verlässlich und im wesentlichen punktuell geklemmt wird. Die punktuelle Klemmung ist insoferne von großer Bedeutung, da die gedachte Verbindung der beiden Klemmpunkte eine Drehachse bildet, um welche der Transportbehälter beim Hochheben durch die Greifvorrichtung schwingt. Der Transportbehälter muss dabei so hoch angehoben werden, dass keine Berührung mit der Auflagefläche mehr erfolgt und ein freies Schwingen um die erwähnte Drehachse möglich ist. Aufgrund der Bewegungsenergie des Transportbehälters erfolgt beim Hochheben desselben ein Überschwingen bzw. Durchschwingen über eine vertikale Position hinaus, in welcher der Transportbehälter verharren würde, ließe man ihn ausschwingen. Das Absenken der Greifvorrichtung muss exakt abgestimmt sein und darf erst dann erfolgen, wenn sich der Transportbehälter in seiner durchgeschwungenen Position befindet, also kurz vor dem Zurückschwingen. Durch das Absenken in dieser Position erfolgt ein Kontakt zwischen der untersten Kante des Transportbehälters und der Auflagefläche, wodurch das Zurückschwingen verhindert wird. Das weitere Absenken der Greifvorrichtung bewirkt dann das verkehrte Ablegen des Transportbehälters auf der Auflagefläche über deren Öffnung und somit die Vollendung der Drehung um 180° um die erwähnte Drehachse und in weitere Folge dessen Entleerung.

Erfindungsgemäß wird dieser Vorgang nunmehr wiederholt, d.h. die Greifvorrichtung klemmt den nunmehr verkehrt auf der Auflagefläche über der Öffnung liegenden Transportbehälter neuerlich, um ihn hochzuheben und nach dem Über- bzw. Durchschwingen über eine vertikale Position wieder abzusenken und ihn für den Weitertransport freizugeben.

Eine bevorzugte Durchführungsvariante des erfindungsgemäßen Verfahrens bzw. eine bevorzugte Ausführungsvariante der erfindungsgemäßen Vorrichtung sieht Anschläge vor, gegen welche der Transportbehälter in eine Ausgangsposition verfahren wird. Die Anschläge ermöglichen ein exaktes Positionieren des Transportbehälters in dieser Ausgangsposition, wodurch auch ein exaktes Klemmen und Hochheben durch die Greifvorrichtung ermöglicht wird. Dies ist insoferne wichtig, als der Transportbehälter exakt oberhalb der Öffnung der Auflagefläche umgedreht werden muss, um die Entleerung auf unter dieser Öffnung angeordnete Abfallbehälter zu ermöglichen.

Es sei an dieser Stelle auch angemerkt, dass dieses Art der Entleerung lediglich für Transportbehälter gedacht ist, mit einem Gesamtgewicht von nicht mehr als 2,5 kg inklusive Inhalt, somit nicht für das Um- oder Ausleeren von Waren an sich.

Zum sicheren Klemmen ist die Greifvorrichtung als an die Seitenwand anpressbare Gummiblöcke ausgebildet. Diese verhindern ein Durchrutschen des Transportbehälters und ermöglichen die Drehung des Transportbehälters um die durch die gedachte Verbindung der Gummiblöcke gebildete Drehachse.

Das erfindungsgemäße Verfahren bzw. die erfindungsgemäße Vorrichtung sieht auch Lichtschranken vor, welche einerseits die Positionierung der Transportbehälter in der Ausgangsposition überwachen und andererseits deren Abtransport nach der Entleerung. Die Steuerung verhindert ein Aktivieren der Greifarme bevor nicht ein entleerter Behälter aus dem Einzugsbereich der Entleervorrichtung entfernt wurde bzw. startet einen Entleerungsvorgang erst dann, wenn sich ein Transportbehälter in der Ausgangsposition befindet.

Eine bevorzugte Ausführungsform der Erfindung sieht vor, das Hochheben des Transportbehälters mit zwei unterschiedlichen Greifvorrichtungen zu bewerkstelligen, wobei eine Greifvorrichtung für die erste 180°-Drehung des Transportbehälters aus seiner Ausgangsposition verantwortlich ist und die andere Greifvorrichtung für die darauffolgende 180°-Drehung in die Abtransportposition verantwortlich ist.

Die Breite der Auflagefläche ist erfindungsgemäß auf die Behälterbreite abgestimmt und die in Transportrichtung verlaufenden Randbereiche mit L-förmigen Kanten versehen, um eine Führung für die Behälter zu bilden.

Alternativ dazu kann auch die mindestens eine Öffnung der Auflagefläche an ihren parallel zur Transportrichtung des Behälters verlaufenden Kanten mit L-förmigen Führungsschienen zur Führung des Behälters versehen sein.

### KURZE BESCHREIBUNG DER FIGUREN

Die Erfindung wird im folgenden anhand der beiliegenden Zeichnungen näher erläutert. Es zeigen dabei
Fig. 1 eine perspektivische Ansicht einer schematisiert dargestellten Entleervorrichtung gemäß der Erfindung,
Fig. 2 eine Seitenansicht der Entleervorrichtung gemäß Fig. 1 in einem ersten Arbeitsschritt, bei dem der Transportbehälter von einer ersten Greifvorrichtung erfasst wird,
Fig. 3 eine Seitenansicht der Entleervorrichtung gemäß Fig. 1 in einem zweiten Arbeitsschritt, bei dem die Greifvorrichtung und somit der Transportbehälter angehoben wird,
Fig. 4 eine Seitenansicht der Entleervorrichtung gemäß Fig. 1 in einem dritten Arbeitsschritt, bei dem die Greifvorrichtung so weit angehoben wurde, sodass der Transportbehälter eine Schwingbewegung um eine vertikale Achse ausführt,
Fig. 5 eine Seitenansicht der Entleervorrichtung gemäß Fig. 1 in einem vierten Arbeitsschritt, bei dem die Greifvorrichtung wieder abgesenkt wurde, sodass der Transportbehälter mit seiner offenen Seite nach unten auf einer Auflagefläche zu liegen kommt,
Fig. 6 eine Seitenansicht der Entleervorrichtung gemäß Fig. 1 in einem fünften Arbeitsschritt, bei dem die Greifvorrichtung und somit der Transportbehälter wieder angehoben werden,
Fig. 7 eine Seitenansicht der Entleervorrichtung gemäß Fig. 1 in einem sechsten Arbeitsschritt, bei dem die Greifvorrichtung so weit angehoben wurde, sodass der Transportbehälter eine Schwingbewegung um eine vertikale Achse ausführt, und
Fig. 8 eine Seitenansicht der Entleervorrichtung gemäß Fig. 1 in einem siebenten Arbeitsschritt, bei dem die Greifvorrichtung wieder abgesenkt wurde, sodass der Transportbehälter mit seiner offenen Seite nach oben auf der Auflagefläche zu liegen kommt.

### WEGE ZUR AUSFÜHRUNG DER ERFINDUNG

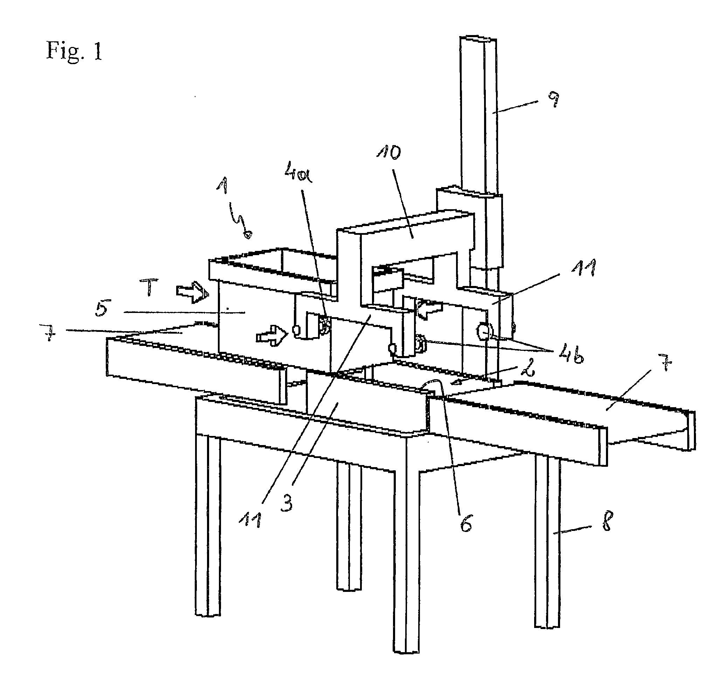

Fig. 1 zeigt eine perspektivische Ansicht einer schematisiert dargestellten Entleervorrichtung gemäß der Erfindung. An die Entleervorrichtung werden über eine Transporteinrichtung, etwa ein Förderband mit einer Transportfläche 7, Transportbehälter 1 entlang einer Transportrichtung T an die Entleervorrichtung herangeführt. Am gegenüberliegenden Ende der Entleervorrichtung befindet sich die Fortsetzung der Transporteinrichtung, über die entleerte Behälter 1 von der Entleervorrichtung wieder abtransportiert werden. Die Entleervorrichtung ist dazu vorgesehen, Verpackungsreste, Lieferscheine, Unrat oder ähnliches aus den Behältern 1 zu entfernen, wozu bloßes Umdrehen der Behälter 1 ausreichend ist, aber nicht für das Um- oder Ausleeren von Waren an sich. Bei den Transportbehältern 1 handelt es sich dabei um vergleichsweise kleine Behälter, die etwa im Rahmen von Kommissionieranlagen zur Zusammenstellung von Waren verwendet werden, und in der Regel ein Gesamtgewicht von nicht mehr als 2,5 kg inklusive Inhalt aufweisen.

Die Entleervorrichtung umfasst im wesentlichen eine Auflagefläche 3, die eine Öffnung 2 definiert. Die Auflagefläche 3 dient dazu, den Transportbehälter 1 so zu lagern, dass die Öffnung des Transportbehälters 1 nach unten orientiert ist, sodass sein Inhalt durch die von der Auflagefläche 3 definierten Öffnung 2 hindurchfallen kann. Die Auflagefläche 3 kann etwa durch einen Rahmen gebildet werden, oder auch lediglich durch zwei parallel zur Transportrichtung T orientierte Leisten, Schienen, Lagerblöcke oder ähnliches. Die Breite der Auflagefläche 3 ist auf die Breite der Behälter 1 abgestimmt, und darf die Breite der Behälter 1 nicht übersteigen. Die Auflagefläche 3 kann des weiteren in ihren in Transportrichtung T verlaufenden Randbereichen mit L-förmigen Kanten versehen, um eine Führung für die Behälter 1 zu bilden. Alternativ dazu kann auch die mindestens eine Öffnung 2 der Auflagefläche 3 an ihren parallel zur Transportrichtung T des Behälters 1 verlaufenden Kanten mit L-förmigen Führungsschienen zur Führung des Behälters 1 versehen sein. Gemäß der in der Fig. 1 gezeigten Ausführungsform ist die Auflagefläche 3 an einem Rahmen 8 befestigt. In der gezeigten Ausführungsform entspricht außerdem die Breite der Auflagefläche 3 der Breite der Behälter 1, wobei diese Breite geringer ist als die Breite der Transportfläche 7.

Am Rahmen 8 ist des weiteren eine Hebe- und Senkvorrichtung befestigt, die in der in Fig. 1 gezeigten Ausführungsform von einer vertikalen Führung 9, sowie einem horizontalen Hubschlitten 10, der an der Führung 9 beweglich angeordnet ist, gebildet wird. Der Hubschlitten 10 ist entlang der Führung 9 in vertikaler Richtung verfahrbar, wobei die jeweilige Heb- und Senkbewegung des Hubschlittens 10 von einer Steuereinrichtung (in den Fig. 1 bis 8 nicht dargestellt) gesteuert und überwacht wird. Auch entsprechende Antriebseinheiten für den Hubschlitten 10 sind in den Fig. 1 bis 8 nicht dargestellt, aber selbstverständlich vorgesehen. Vom Hubschlitten 10 stehen Verbindungsträger 11 seitlich ab, an denen die Greifvorrichtungen 4a, 4b befestigt sind. In der in Fig. 1 gezeigten Ausführungsform sind zwei Paar jeweils gegenüberliegender Greifvorrichtungen 4a, 4b vorgesehen, es wäre aber auch denkbar, lediglich ein Paar gegenüberliegender Greifvorrichtungen 4a vorzusehen, wobei in diesem Fall für eine horizontale Verfahrbarkeit der Greifvorrichtungen 4a gesorgt werden müsste, wie sich aus dem folgenden noch ergibt.

Die beiden Greifvorrichtungen 4a sind in einer Richtung normal zur Transportrichtung T bewegbar, d.h., sie können aufeinander zu oder voneinander weg bewegt werden. Entsprechende Antriebseinheiten sind hierzu vorgesehen, in den Fig. 1 bis 8 aber nicht dargestellt. Auch die beiden Greifvorrichtungen 4b des zweiten Paares sind in einer Richtung normal zur Transportrichtung T bewegbar, d.h., sie können ebenfalls aufeinander zu oder voneinander weg bewegt werden. Entsprechende Antriebseinheiten sind hierzu vorgesehen, in den Fig. 1 bis 8 aber wiederum nicht dargestellt. Zum sicheren Klemmen ist die Greifvorrichtung 4a, 4b als an die Seitenwand der Behälter 1 anpressbare Gummiblöcke ausgebildet. Diese verhindern ein Durchrutschen des Transportbehälters 1 und ermöglichen die Drehung des Transportbehälters 1 um die durch die gedachte Verbindung der Gummiblöcke gebildete Drehachse, wie noch näher ausgeführt werden wird.

Eine bevorzugte Durchführungsvariante des erfindungsgemäßen Verfahrens bzw. eine bevorzugte Ausführungsvariante der erfindungsgemäßen Vorrichtung sieht Anschläge (in den Fig. 1 bis 8 nicht dargestellt) vor, gegen welche der Transportbehälter 1 in eine Ausgangsposition verfahren wird. Die Anschläge ermöglichen ein exaktes Positionieren des Transportbehälters 1 in dieser Ausgangsposition, wodurch auch ein exaktes Klemmen und Hochheben durch die Greifvorrichtung 4a, 4b ermöglicht wird. Dies ist insoferne wichtig, als der Transportbehälter 1 exakt oberhalb der Öffnung 2 der Auflagefläche 3 umgedreht werden muss, um die Entleerung auf unter dieser Öffnung 2 angeordnete Abfallbehälter (in den Fig. 1 bis 8 nicht dargestellt) zu ermöglichen.

Das erfindungsgemäße Verfahren bzw. die erfindungsgemäße Vorrichtung sieht auch Lichtschranken (in den Fig. 1 bis 8 nicht dargestellt) vor, welche einerseits die Positionierung der Transportbehälter 1 in der Ausgangsposition überwachen und andererseits deren Abtransport nach der Entleerung. Durch geeignete Steuerung der Entleervorrichtung wird ein Aktivieren der Greifarme 4a, 4b verhindert, bevor nicht ein entleerter Behälter 1 aus dem Einzugsbereich der Entleervorrichtung entfernt wurde, bzw. startet einen Entleerungsvorgang erst dann, wenn sich ein Transportbehälter 1 in der Ausgangsposition befindet.

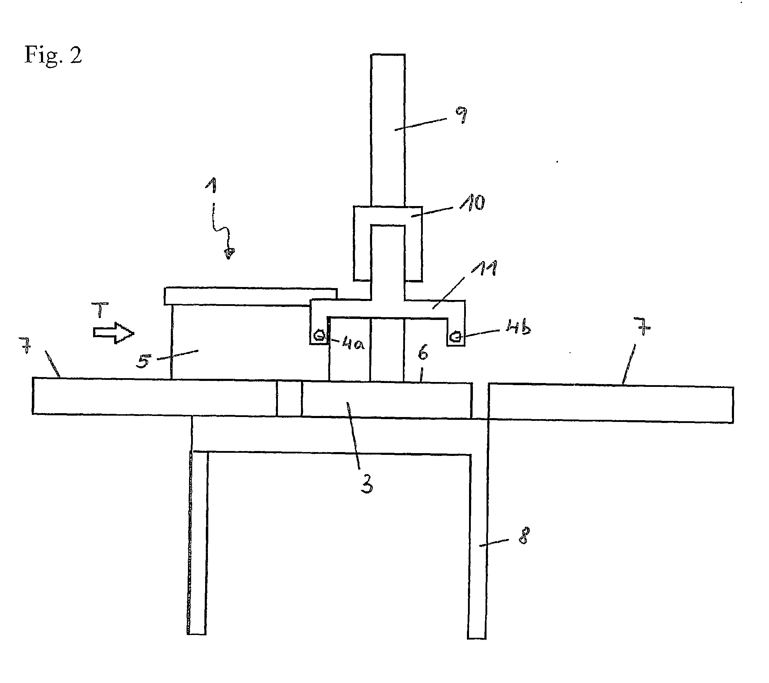

Die erfindungsgemäße Verfahrensweise wird im folgenden anhand der Fig. 2 bis 8 näher erläutert. Wie in der Fig. 2 gezeigt wird, wird zunächst in einem ersten Arbeitsschritt ein Transportbehälter 1, der auf der Transportfläche 7 einer Transporteinrichtung ruht, an die erfindungsgemäße Entleervorrichtung herangeführt. Er schlägt in weiterer Folge an einem Anschlag (in Fig. 2 nicht dargestellt) an und wird von Lichtschranken erfasst, die die Greifvorrichtungen 4a aktivieren. Die Greifvorrichtungen 4a werden daraufhin aufeinander zu bewegt, sodass sie mit einer definierten Anpresskraft an jenen Außenwänden des Behälters 1, die parallel zur Transportrichtung T orientiert sind, anliegen. Der Behälter 1 wird somit von der ersten Greifvorrichtung 4a erfasst, wobei die gedachte Verbindungslinie zwischen den beiden Anpresspunkten der Greifvorrichtungen 4a eine Drehachse definiert, wie im folgenden noch näher erläutert werden wird.

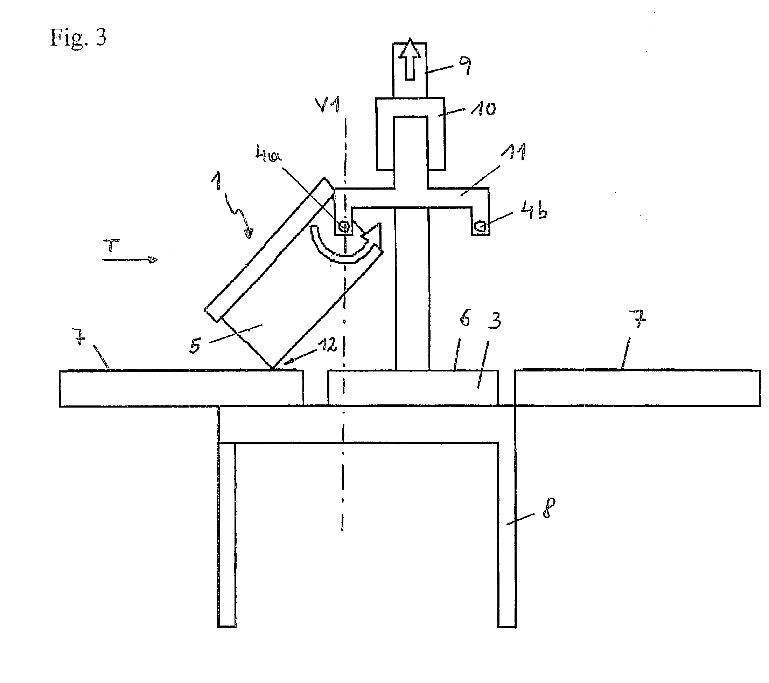

Wie in der Fig. 3 gezeigt wird, wird in weiterer Folge mithilfe einer Steuereinrichtung und einer Antriebseinheit (in der Fig. 3 nicht dargestellt) der Hubschlitten 10 angehoben, wodurch auch der Behälter 1 angehoben wird und sich dabei lediglich durch seine den Anpresspunkten der Greifvorrichtungen 4a abgewandten, unteren Querkante 12 auf der Transportfläche 7 abstützt. Bei zunehmendem Anheben des Hubschlittens 10 rutscht diese untere Querkante 12 des Behälters 1 immer näher an die Entleervorrichtung heran, wobei der Behälter 1 zunehmend gekippt wird.

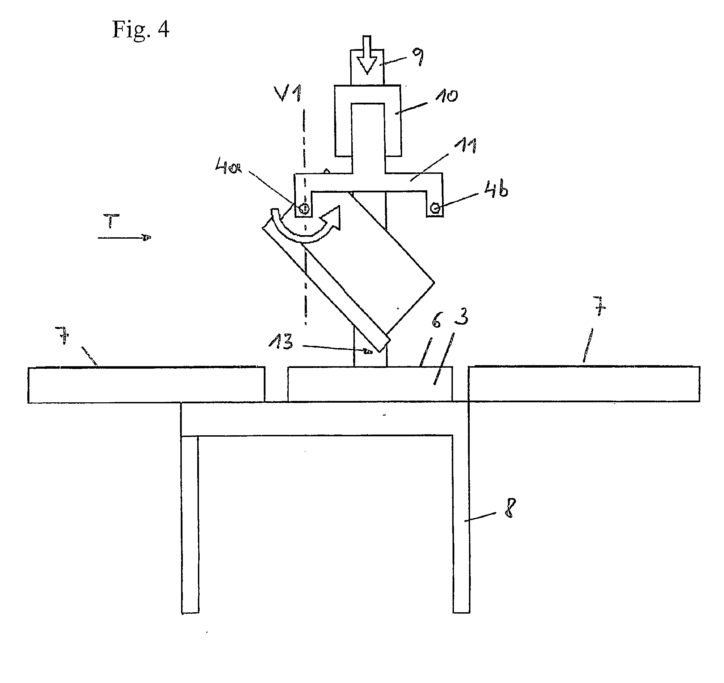

Bei ausreichender Höhe des Hubschlittens 10 wird schließlich auch die untere Querkante 12 des Behälters 1 von der Transportfläche 7 abgehoben, sodass der Behälter 1 eine Schwingbewegung um die vertikale Achse V1 ausführt (Fig. 4). Ein Zurückschwingen des Behälters 1 in die in der Fig. 3 gezeigten Position wird aber unterbunden, indem der Hubschlitten 10 wieder abgesenkt wird, sodass der Behälter 1 beim Zurückschwingen vielmehr mit einer oberen Querkante 13 auf der Auflagefläche 3 aufschlägt. Der Hubschlitten 10 wird nun zunehmend abgesenkt, wobei die obere Querkante 13 entlang der oberen Auflagekanten 6 in Transportrichtung T rutscht.

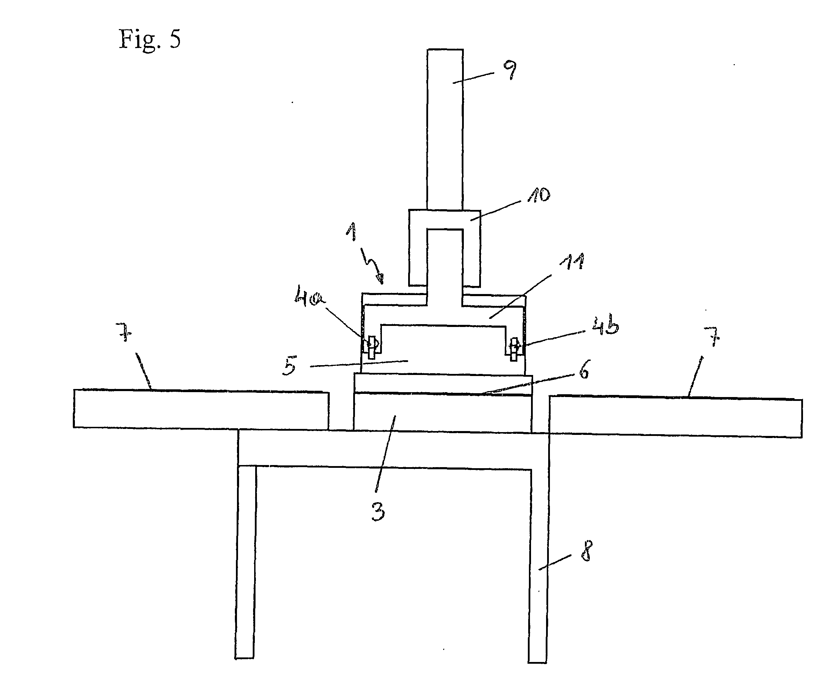

Schließlich wird die Position gemäß Fig. 5 erreicht, bei der der Transportbehälter 1 mit seiner offenen Seite nach unten auf der Auflagefläche 3 zu liegen kommt, wodurch eventuelle Rückstände im Behälter 1 wie Verpackungsmaterial, Lieferscheine, Unrat oder dergleichen, aus dem Behälter 1 fallen und durch die Öffnung 2 hindurchfallen, wo sie von einem Auffangbehälter (in der Fig. 5 nicht dargestellt) aufgefangen werden.

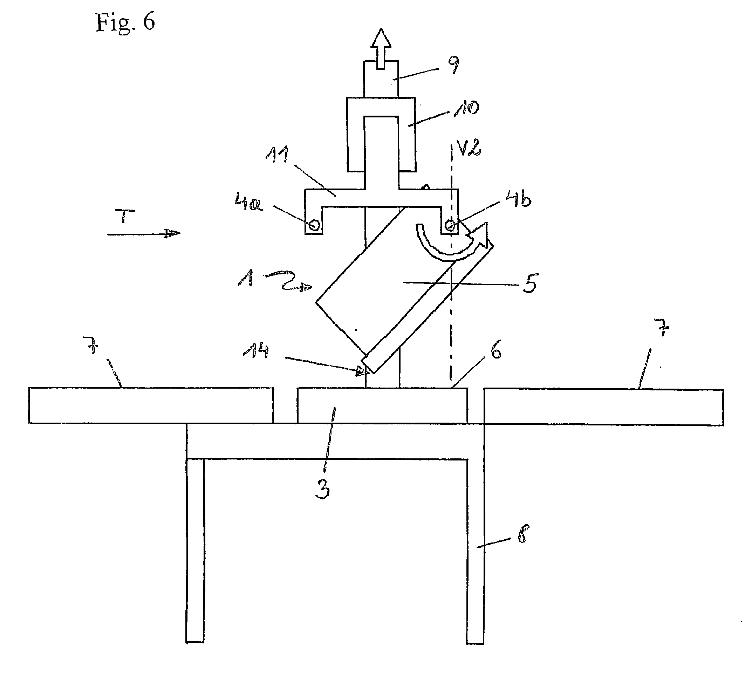

Nach einer definierten Verweildauer in der Position gemäß Fig. 5 wird die Greifvorrichtung 4a von den Außenwänden 5 des Behälters 1 abgehoben, die den Behälter 1 somit wieder freigeben. In weiterer Folge werden die Greifvorrichtungen 4b aufeinander zu bewegt, sodass sie mit einer definierten Anpresskraft an den Außenwänden des Behälters 1, die parallel zur Transportrichtung T orientiert sind, anliegen. Der Behälter 1 wird somit von der zweiten Greifvorrichtung 4b erfasst, wobei die gedachte Verbindungslinie zwischen den beiden Anpresspunkten der Greifvorrichtungen 4b wiederum eine Drehachse definiert. Wird nun der Hubschlitten 10 wieder angehoben, so wird auch der Behälter 1 wieder angehoben, allerdings rutscht der Behälter 1 nun auf seiner zweiten, oberen Querkante 14 entlang der oberen Auflagekanten 6 in Transportrichtung T (Fig. 6).

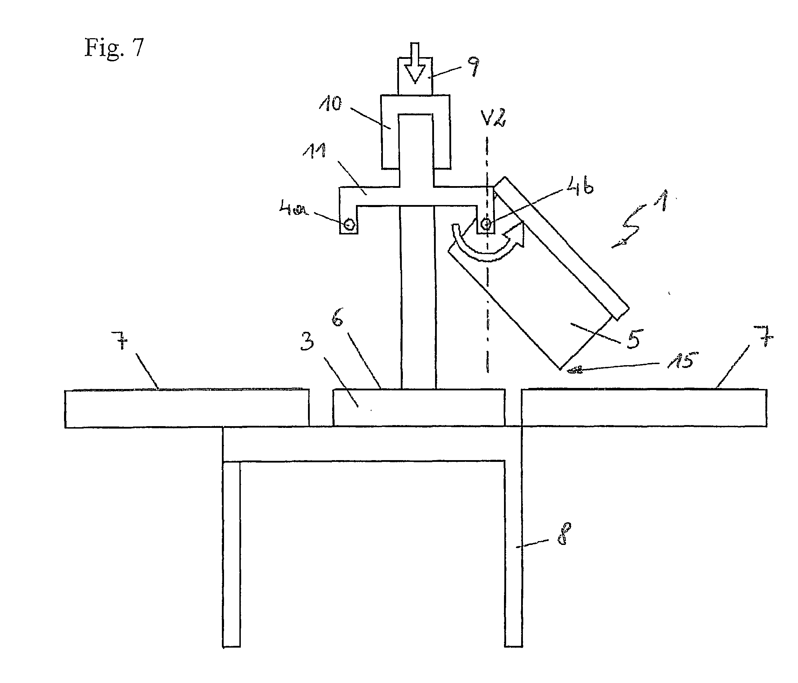

Bei ausreichender Höhe des Hubschlittens 10 wird schließlich auch die Querkante 14 des Behälters 1 von der Auflagefläche 3 abgehoben, sodass der Behälter 1 eine Schwingbewegung um die vertikale Achse V2 ausführt (Fig. 7). Ein Zurückschwingen des Behälters 1 in die in der Fig. 6 gezeigten Position wird aber wiederum unterbunden, indem der Hubschlitten 10 wieder abgesenkt wird, sodass der Behälter 1 beim Zurückschwingen vielmehr mit seiner zweiten, unteren Querkante 15 auf der Auflagefläche 3 oder der Transportfläche 7 aufschlägt, je nach räumlicher Erstreckung der Auflagefläche 3. Der Hubschlitten 10 wird nun zunehmend abgesenkt, wobei die Querkante 15 entlang der oberen Auflagekanten 6 oder entlang der Transportfläche 7 in Transportrichtung T rutscht.

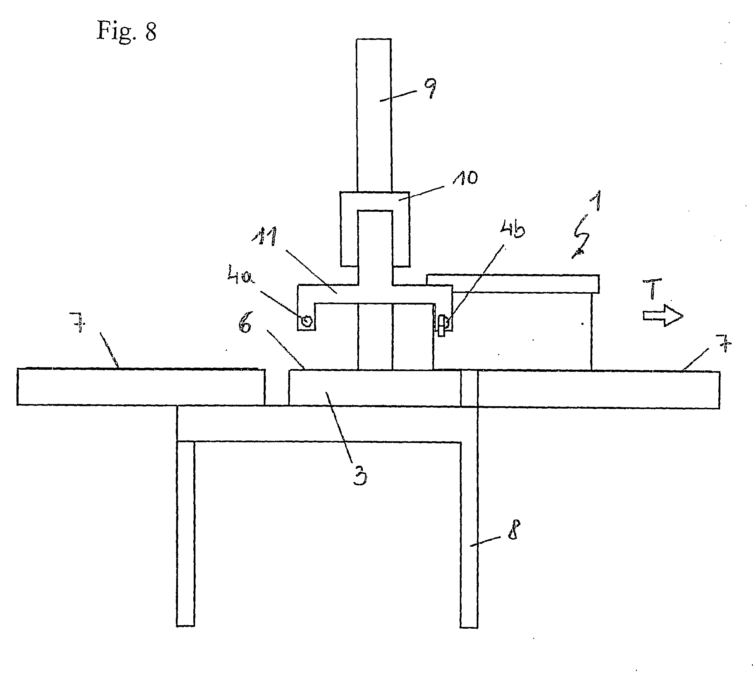

Schließlich wird die Position gemäß Fig. 8 erreicht, bei der der Transportbehälter 1 mit seiner offenen Seite nach oben auf der Auflagefläche 3 bzw. der Transportfläche 7 zu liegen kommt. Der entleerte Behälter 1 kann in dieser Position weiter transportiert und etwa Befüllstationen zugeführt werden.

Die vorliegende Erfindung ermöglicht somit auf einfache Weise eine automatisierte Entleerung der Behälter.

## Patentansprüche

1. Verfahren zum Entleeren eines mittels Transporteinrichtungen beförderten Transportbehälters (1), welcher an eine definierte Ausgangsposition an eine Auflagefläche (3) herangeführt, mittels einer Greifvorrichtung (4a, 4b) an seinen Außenwänden ergriffen und durch vertikales Verfahren der Greifvorrichtung (4a, 4b) hochgehoben wird, **gekennzeichnet durch** folgende Verfahrensschritte:
- Ergreifen des Transportbehälters (1) **durch** im wesentlichen punktuelle, ein freies Schwenken des Transportbehälters (1) zulassende Klemmung desselben an seinen zur Transportrichtung (T) parallelen Außenwänden
- Hochheben des Transportbehälters (1) **durch** vertikales Verfahren der Greifvorrichtung (4a, 4b) um eine Strecke, die ein Durchschwingen des Transportbehälters (1) über eine Vertikale (V1) Ausrichtung hinaus ermöglicht
- Absenken des Transportbehälters (1) in seinem überschwungenen Zustand und Ablegen desselben auf der eine Öffnung (2) aufweisenden Auflagefläche (3)
sowie vorzugsweise
- neuerliches Ergreifen des Transportbehälters **durch** im wesentlichen punktuelle, ein freies Schwenken des Transportbehälters (1) zulassende Klemmung desselben an seinen zur Transportrichtung (T) parallelen Außenwänden mittels Greifvorrichtung (4a, 4b)
- Hochheben des Transportbehälters (1) **durch** vertikales Verfahren der Greifvorrichtung (4a, 4b) um eine Strecke, die das Durchschwingen des Transportbehälters (1) über eine Vertikale (V2) Ausrichtung hinaus ermöglicht
- Absenken des Transportbehälters (1) in seinem überschwungenen Zustand und Ablegen desselben teilweise auf der Transporteinrichtung (7)

2. Verfahren nach Anspruch 1, **dadurch gekennzeichnet, dass** die Klemmung des Transportbehälters (1) an der in Transportrichtung (T) gesehen vorderen Hälfte der Transportbehälter (1) erfolgt.

3. Verfahren nach Anspruch 1, **dadurch gekennzeichnet, dass** die Bereitstellung des Transportbehälters (1) in der Ausgangsposition mittels eines Sensors überwacht wird.

4. Verfahren nach Anspruch 1 und 2, **dadurch gekennzeichnet, dass** der Abtransport des entleerten Transportbehälters (1) mittels eines Sensors überwacht wird.

5. Vorrichtung zum Entleeren von mittels Transporteinrichtungen transportierten Transportbehältern (1), umfassend eine vertikal verfahrbare Greifvorrichtung (4a, 4b) zum Hochheben und Entleeren der Transportbehälter (1), **dadurch gekennzeichnet, dass** unterhalb der Greifvorrichtung (4a,4b) eine Auflagefläche (3) mit mindestens einer Öffnung (2) vorgesehen ist und die Greifvorrichtung (4a,4b) Klemmbacken zur Klemmung des Transportbehälters (1) an seinen zur Transportrichtung (T) parallelen Seitenwänden (5) aufweist, wobei der vertikale Hubweg der Greifvorrichtung (4a,4b) mindestens einer Länge entspricht, die ein Durchschwingen des Transportbehälters (1) über eine vertikale Position (V1) ermöglicht und eine Steuerung vorgesehen ist, die nach erfolgtem einmaligen Durchschwingen des Transportbehälters (1) die Greifvorrichtung (4a,4b) auf der Auflagefläche (3) über der Öffnung (2) abgesenkt, um ein Zurückschwingen des Transportbehälters (1) in seine Trägheitslage zu verhindern.

6. Vorrichtung zum Entleeren von Transportbehältern nach Anspruch 5, **dadurch gekennzeichnet, dass** zwei unterschiedliche Greifvorrichtungen (4a,4b) vorgesehen sind, und das Anheben aus der Ausgangsposition und das Anheben aus der Entleerposition durch jeweils eine dieser Greifvorrichtungen (4a, 4b) durchgeführt wird.

7. Vorrichtung zum Entleeren von Transportbehältern nach einem der Ansprüche 5 und 6, **dadurch gekennzeichnet, dass** ein Anschlag vorgesehen ist, gegen welchen der Behälter (1) vor dem ersten Hochheben positioniert wird.

8. Vorrichtung zum Entleeren von Transportbehältern nach einem der Ansprüche 5 bis 7, **dadurch gekennzeichnet, dass** in Transportrichtung (T) des Behälters (1) gesehen vor der ersten Greifvorrichtung (4a) ein zur Positionsfeststellung des in die Vorrichtung einfahrenden Behälters (1) dienender Lichtschranken angeordnet ist.

9. Vorrichtung zum Entleeren von Transportbehältern nach einem der Ansprüche 5 bis 8, **dadurch gekennzeichnet, dass** in Transportrichtung (T) des Behälters (1) gesehen nach der zweiten Greifvorrichtung (4b) ein zur Positionsfeststellung des aus der Vorrichtung ausfahrender Behälters (1) dienender Lichtschranken angeordnet ist.

10. Vorrichtung zum Entleeren von Transportbehältern nach einem der Ansprüche 5 bis 9, **dadurch gekennzeichnet, dass** die Greifvorrichtungen (4a,4b) seitlich an die Behälterwand anpressbare Gummiblöcke (4a,4b) sind.

11. Vorrichtung zum Entleeren von Transportbehältern nach einem der Ansprüche 5 bis 10, **dadurch gekennzeichnet, dass** die Breite der Auflagefläche (3) auf die Behälterbreite abgestimmt ist und die in Transportrichtung (T) verlaufenden Randbereiche mit L-förmigen Kanten (6) versehen sind, um eine Führung für die Behälter (1) zu bilden.

## Claims

1. A method for emptying a transport container (1) conveyed using a transport device, the transport container being guided to a defined starting position on an application face (3), grabbed by a grabbing device (4a, 4b) on its outer walls and lifted by vertically moving the grabbing device (4a, 4b), **characterized by** the following method steps:
- grabbing the transport container (1) substantially by clamping the same on its outer walls, being parallel to the transport direction (T), wherein the transport container (1) is allowed to swing freely
- lifting the transport container (1) by vertically moving the grabbing device (4a, 4b) for a distance allowing the transport container (1) to swing across a vertical (V1) orientation
- lowering the transport container (1) in its overswung condition and depositing the same on the application face (3) which has an opening (2)
as well as preferably
- re-grabbing the transport container substantially by a point-to-point clamping of the same on its outer walls, being parallel to the transport direction (T), via a grabbing device (4a, 4b), wherein the transport container (1) is allowed to swing freely
- lifting the transport container (1) by vertically moving the grabbing device (4a, 4b) for a distance allowing the overswinging of the transport container across a vertical (V2) orientation
- lowering the transport container (1) in its overswung condition and depositing the same partially on the transport means (7).

2. The method of claim 1, **characterized in that** the clamping of the container (1) happens in the front half of the transport container (1), as seen from the transport direction (T).

3. The method of claim 1, **characterized in that** the provision of the transport container (1) in the starting position is monitored by a sensor.

4. The method of claim 1 and 2, **characterized in that** the evacuation of the emptied transport container (1) is monitored by a sensor.

5. An apparatus for emptying transport containers (1) being conveyed by transport means, the apparatus comprising a vertically movable grabbing device (4a, 4b) for lifting and emptying the transport containers (1), **characterized in that** beneath the grabbing device (4a, 4b) an application face (3) having at least an opening (2) is provided, and the grabbing device (4a, 4b) comprises clamping jaws for clamping the transport container (1) at its lateral walls (5), being parallel to the transport direction (T), wherein the vertical lifting path of the grabbing device (4a, 4b) corresponds at least to a length allowing overswinging of the transport container (1) across a vertical position (V1), and a control is provided which lowers the grabbing device (4a, 4b) onto the application face (3) over the opening (2), after the transport container (1) is overswung once, in order to prevent the transport container (1) from swinging back into its inertia attitude.

6. The apparatus for emptying transport containers of claim 5, **characterized in that** two different grabbing devices (4a, 4b) are provided, and the lifting from the starting position and the lifting from the emptying position is respectively performed by one of the grabbing devices (4a, 4b).

7. The apparatus for emptying transport containers of one of the claims 5 and 6, **characterized in that** a stopper is provided against which the container (1) is positioned before the first lifting.

8. The apparatus for emptying transport containers of any of claims 5 to 7, **characterized in that,** as seen in the transport direction (T) of the container (1), a light barrier is arranged in front of the first grabbing device (4a) in order to determine a position of a container (1) driving into the apparatus.

9. The apparatus for emptying transport containers of any of claims 5 to 8, **characterized in that,** as seen in the transport direction (T) of the container (1), a light barrier is arranged after the second grabbing device (4b) in order to determine a position of a container (1) exiting the apparatus.

10. The apparatus for emptying transport containers of any of claims 5 to 9, **characterized in that** the grabbing devices (4a, 4b) are rubber blocks (4a, 4b) which can be laterally pressed onto the container wall.

11. The apparatus for emptying transport containers of any of claims 5 to 10, **characterized in that** the width of the application face (3) is adapted to the container width, and peripheral areas, being orientated into the transport direction (T), are provided with L-shaped edges in order to form guidance for the containers (1).

## Revendications

1. Procédé pour vider un récipient de transport (1) transporté au moyen de dispositifs de transport, lequel est approché d'une position initiale définie sur une surface de support (3), est saisi par ses parois extérieures au moyen d'un dispositif de préhension (4a, 4b), et est soulevé par déplacement vertical du dispositif de préhension (4a, 4b), **caractérisé par** les étapes de procédé suivantes :
- saisir le récipient de transport (1) par serrage, sensiblement ponctuel, de celui-ci, permettant un pivotement libre du récipient de transport (1), par ses parois extérieures parallèles à la direction de transport (T)
- relever le récipient de transport (1) par déplacement vertical du dispositif de préhension (4a, 4b) d'une distance qui permet une oscillation du récipient de transport (1) au-delà d'une orientation verticale (V1)
- abaisser le récipient de transport (1) dans son état oscillé et déposer celui-ci sur la surface de support (3) présentant une ouverture (2)
ainsi que de préférence
- saisir à nouveau le récipient de transport par serrage sensiblement ponctuel de celui-ci, permettant un pivotement libre du récipient de transport (1), par ses parois extérieures parallèles à la direction de transport (T), au moyen d'un dispositif de préhension (4a, 4b)
- relever le récipient de transport (1) par déplacement vertical du dispositif de préhension (4a, 4b) d'une distance qui permet une oscillation du récipient de transport (1) au-delà d'une orientation verticale (V1)
- abaisser le récipient de transport (1) dans son état oscillé et déposer celui-ci en partie sur le dispositif de transport (7).

2. Procédé selon la revendication 1, **caractérisé en ce que le serrage du récipient de transport (1) s'effectue sur la m**oitié avant du récipient de transport (1), vu dans le sens de transport (T).

3. Procédé selon la revendication 1, **caractérisé en ce que** la préparation du récipient de transport (1) dans la position initiale est surveillée au moyen d'un capteur.

4. Procédé selon les revendications 1 et 2, **caractérisé en ce que** l'évacuation du récipient de transport (1) vidangé est surveillée au moyen d'un capteur.

5. Dispositif pour vider des récipients de transport (1) transportés au moyen de dispositifs de transport, comprenant un dispositif de préhension (4a, 4b) déplaçable verticalement pour relever et vidanger les récipients de transport (1), **caractérisé en ce qu'**au-dessous du dispositif de préhension (4a, 4b) est prévue une surface de support (3) avec au moins une ouverture (2), et le dispositif de préhension (4a, 4b) comporte des mâchoires de serrage pour serrer le récipient de transport (1) sur ses parois latérales (5) parallèles à la direction de transport, la course de levage verticale du dispositif de préhension (4a, 4b) correspondant au moins à une longueur qui permet une oscillation du récipient de transport (1) au-delà d'une position verticale (V1), et il est prévu une commande qui, après oscillation une fois du récipient de transport (1), abaisse le dispositif de préhension (4a, 4b) sur la surface de support (3) au-dessus de l'ouverture (2), pour empêcher un retour du récipient de transport (1) dans sa position d'inertie.

6. Dispositif pour vidanger des récipients de transport selon la revendication 5, **caractérisé en ce que** sont prévus deux dispositifs de préhension (4a, 4b) différents, et le relevage à partir de la position initiale et le relevage à partir de la position de vidange sont exécutés chaque fois par un de ces dispositifs de préhension (4a, 4b).

7. Dispositif pour vider des récipients de transport selon l'une quelconque des revendications 5 et 6, **caractérisé en ce qu'**il est prévu une butée contre laquelle le récipient (1) est positionné avant le premier relevage.

8. Dispositif pour vider des récipients de transport selon l'une quelconque des revendications 5 à 7, **caractérisé en ce que** devant le premier dispositif de préhension (4a), vu dans le sens de transport (T) du récipient (1), il est prévu des barrières optiques servant à fixer la position du récipient (1) entrant dans le dispositif.

9. Dispositif pour vider des récipients de transport selon l'une quelconque des revendications 5 à 8, **caractérisé en ce qu'**après le second dispositif de préhension (4b), vu dans le sens de transport (T) du récipient (1), il est disposé des barrières lumineuses servant à fixer la position du récipient (1) sortant du dispositif.

10. Dispositif pour vider des récipients de transport selon l'une quelconque des revendications 5 à 9, **caractérisé en ce que** les dispositifs de préhension (4a, 4b) sont des blocs de caoutchouc (4a, 4b) pouvant être pressés latéralement contre la paroi des récipients.

11. Dispositif pour vidanger des récipients de transport selon l'une quelconque des revendications 5 à 10, **caractérisé en ce que** la largeur de la surface de support (3) est adaptée à la largeur du récipient et les zones de bordure, s'étendant dans la direction de transport (T), sont pourvues d'arêtes (6) en forme de L, afin de former un guidage pour les récipients (1).
